# DEMANDE DE BREVET EUROPEEN

(11) **EP 0 997 729 A1**
(43) Date de publication de la demande: **03.05.2000**
(21) Numéro de dépôt: 99402643.3
(22) Date de dépôt: 25.10.1999
(51) Int. Cl.: G01N 21/64, G02B 21/00

(54) **Dispositif de détermination de la concentration d'une substance mélangée à un fluorophore et procédé de mise en oeuvre de ce dispositif**

(30) Priorité: 27.10.1998 FR 9813438
(71) Demandeur: COMMISSARIAT A L'ENERGIE ATOMIQUE, 75752 Paris Cédex 15 (FR)
(72) Inventeur: Peltie, Philippe, 38760 Saint Paul de Varces (FR); David, Dominique, 38640 Claix (FR)
(74) Mandataire: Des Termes, Monique

(57) **Abrégé**

L'invention concerne un dispositif, et son procédé de mise en oeuvre, pour déterminer de la concentration d'une substance mélangée à un fluorophore et contenue dans un ou plusieurs plots d'une matrice de plots ; il comprend :
- un microscope (1), associé à un objectif de grossissement (2) ainsi qu'à des moyens de prise d'image (4, 5) pour réaliser une image sous microscope de la fluorescence d'un des plots de la matrice ou d'une partie de ce plot ;
- des moyens d'éclairage (11, 13) émettant un premier faisceau pour permettre la prise d'image en lumière blanche dudit plot et un second faisceau pour exciter le fluorophore contenu dans ledit plot ;
- des moyens de déflexion (15) du second faisceau pour assurer un balayage, point par point, du plot de la matrice ;
- des moyens d'enregistrement (6, 7) de l'image du plot ; et
- des moyens de traitement (6, 7) de cette image pour quantifier la fluorescence du plot et déterminer la concentration de la substance.

## Description

### Domaine de l'invention

L'invention concerne un dispositif de détermination de la concentration d'une substance mélangée à un fluorophore ; elle concerne également son procédé de mise en oeuvre.

L'invention trouve des applications dans de nombreux domaines et, en particulier, dans le domaine médical avec le séquençage des génomes, la recherche de mutations responsables de maladies génétiques, le développement de nouveaux médicaments, etc.

### Etat de la technique

La technique de fluorescence (ou photoluminescence de courte durée de vie) est une technique d'analyse chimique sélective souvent utilisée par l'homme de l'art pour déterminer la concentration d'une substance. Pour cela, la substance à étudier est mélangée à un fluorophore. En effet, la molécule de fluorophore a la propriété, lorsqu'elle est excitée à une longueur d'onde λ, de réémettre de la lumière avec un spectre dont le maximum est supérieur à la longueur d'onde d'émission (λ' > λ : loi de STOCKES). Dès que l'excitation cesse, la fluorescence décroît de manière exponentielle : It = Iₒ*e^{-kt}. Aussi, pour observer un phénomène de fluorescence « rémanent », il est nécessaire d'entretenir l'excitation.

Par ailleurs, on sait que toute l'énergie stockée par la molécule n'est pas restituée sous forme de fluorescence. La molécule conserve, en effet, une partie de l'énergie sous forme vibrationnelle. Cet excès d'énergie est dissipé par des processus non radiatifs, appelés mécanismes de relaxation vibrationnelle.

On peut alors déterminer le rendement de fluorescence ρ, qui est le rapport entre le nombre de photons émis et le nombre de photons absorbés ; ce rendement est ρ = If/Ia.

On montre que If = ρ*Iₒ*ε*1*C, où I₀ est l'intensité excitatrice, 1 est l'épaisseur de la substance, C est la concentration molaire, et ε est le coefficient d'absorption molaire de la substance.

Par contre, si la concentration augmente trop, la fluorescence n'est plus proportionnelle à la concentration, car la solution absorbe plus vite qu'elle ne fluoresce. On sort alors de la « zone linéaire ».

Si l'on place une caméra CCD pour former l'image de fluorescence, on peut dire, en première approximation, que l'éclairement reçu sur la caméra est proportionnel à If, la fluorescence étant isotrope dans l'espace ; on a alors E = π*L*dΣ/ds (loi de LAMBERT), où E est l'éclairement, L est la luminance (constante pour une émission isotope et proportionnelle à l'intensité d'excitation), dΣ est la surface émettrice, et dS est la surface du pixel CCD. Or, le signal vidéo en sortie de caméra est donné par la relation : Vos = q*η*Nph*G/Cl, où q est la charge électrique, Nph est le nombre de photons incidents, G est le gain, Cl est la capacité de sortie et η est le rendement quantique.

Si l'on ne sature pas la caméra CCD, l'éclairement est proportionnel au temps d'intégration et au nombre de photons reçus par unité de temps. On peut alors écrire que Vos est proportionnel à l'intensité de fluorescence If et au temps d'intégration T, donc à l'intensité d'excitation Io, au temps d'intégration T, et à la concentration molaire, les autres paramètres étant fixés et dépendant des outils utilisés ; soit : Vos = k*I₀*T*C.

Cette formule est vraie si et seulement si on travaille dans une zone linéaire, c'est-à-dire si la concentration molaire n'est pas trop élevée, si l'intensité d'excitation ne provoque pas une absorption qui masque la fluorescence et si l'intensité d'émission et le temps d'intégration ne sature pas la caméra CCD.

Si l'on veut donc quantifier la fluorescence, il est impératif d'étalonner l'expérience en ayant la possibilité de jouer sur deux facteurs : le temps d'intégration et l'intensité du laser d'excitation. Cet étalonnage peut se faire avec, par exemple, des plots recouverts de substance de concentration connue. Avec une caméra refroidie à très bas niveau de bruit, on peut imaginer obtenir 10 bits de résolution, soit environ une dynamique de 1 000, voire plus.

Cette technique de fluorescence est utilisée, en particulier, pour identifier et doser les constituants d'un mélange d'ADN appliqué sur la surface d'une puce à acides nucléiques, appelée puce à ADN. La détermination du dosage des constituants de ce mélange est réalisée au moyen d'un lecteur de puces à ADN.

Il existe actuellement de nombreux lecteurs de puces à ADN adaptés chacun à un type de puce particulier.

Par exemple, les documents US-A-5 578 832, WO-97 4361 et US-A-5 646 411 décrivent des systèmes de lecture adaptés à la puce fabriquée par la Société AFFYMETRIX, appelée « GENECHIP® ». Chacun de ces systèmes consiste en un microscope à balayage utilisé en confocal ou non-confocal pour analyser point par point une surface de 10 x 10 mm environ avec des pas de 10 à 50 µm.

Le document US-A-5 585 639 décrit un système de lecture à barrette linéaire assurant une lecture séquentielle et une reconstruction d'une image 2D de la fluorescence de la puce. Ce système est également adapté à la lecture des puces « GENECHIP® ».

Or, cette puce GENECHIP® est de taille relativement importante pour une puce, soit environ 10 x 10 mm, ce qui constitue un inconvénient dans certaines applications. Par ailleurs, ces puces comportent un nombre de plots importants, contiguës dans les deux dimensions, ce qui peut rendre leur localisation difficile. Enfin, la lecture de plusieurs plots est nécessaire pour la constitution d'une mesure biologiquement significative.

### Exposé de l'invention

L'invention propose justement un lecteur adapté à un autre type de puces à ADN et, en particulier, aux puces MICAM® qui ont une taille restreinte (1 à 2 mm²), et des plots peu nombreux (100 à 1 000 plots) mais bien espacés (100 µm), cette structure permettant à chaque plot de porter une séquence bien définie, parfaitement localisée.

En d'autres termes, l'invention concerne un dispositif pour déterminer les concentrations des composants d'une substance mélangée, par exemple à base d'ADN, appliquée sur la surface d'une puce MICAM®.

De façon plus précise, l'invention propose un dispositif de détermination de la concentration d'une substance mélangée à un fluorophore et contenue dans un ou plusieurs plots d'une matrice de plots conducteurs ou non cnoducteurs déposés sur un support peu absorbant et réfléchissant, caractérisé en ce qu'il comprend :
- un microscope associé à un objectif de grossissement ainsi qu'à des moyens de prise d'image pour réaliser une image sous microscope de la fluorescence d'un des plots de la matrice ou d'une partie de ce plot ;
- des moyens d'éclairage émettant un premier faisceau pour permettre la prise d'image en lumière blanche dudit plot et un second faisceau pour exciter le fluorophore contenu dans ledit plot ;
- des moyens de déflexion du second faisceau pour assurer un balayage, point par point, du plot de la matrice ;
- des moyens d'enregistrement de l'image du plot ; et
- des moyens de traitement de cette image pour quantifier la fluorescence du plot et déterminer la concentration de la substance mélangée au fluorophore, à partir de l'intensité de la fluorescence, de l'intensité de l'éclairage et du temps d'intégration sur les moyens de prise d'images.

Avantageusement, les moyens d'éclairage comportent une source d'éclairage annulaire qui émet le premier faisceau et une source laser qui émet le second faisceau.

Selon un mode de réalisation de l'invention, les moyens de prise d'image comprennent une caméra CCD refroidie, un filtre coloré placé devant ladite caméra et une carte électronique assurant le pilotage du photomultiplicateur et des moyens d'éclairage.

Selon un autre mode de réalisation de l'invention, les moyens de prise d'image comprennent un photomultiplicateur associé à une carte d'acquisition, un filtre coloré placé devant ledit photomultiplicateur et une carte électronique assurant le pilotage de la caméra et des moyens d'éclairage.

Le microscope du dispositif de l'invention peut être muni d'un filtre dichroïque.

Avantageusement, ce microscope fonctionne en épi-illumination.

De préférence, les moyens de déflexion du dispositif de l'invention consistent en un déflecteur acousto-optique défléchissant le second faisceau dans deux directions orthogonales X et Y.

Selon un mode de réalisation de l'invention, le laser est un microlaser ; celui-ci peut être un microlaser pulsé.

Selon une variante de l'invention, le filtre coloré est un filtre passe-haut.

Dans certaines applications, la matrice est une matrice adressable électriquement.

Par ailleurs, la substance peut être composée de brins d'ADN hybridés à des sondes faites à partir d'ADN de synthèse et ces sondes à ADN peuvent être fortement fixées aux plots par l'intermédiaire de polypyrrole.

En fonction des applications, le fluorophore peut être de la phycroerythrine, du C-Snarf ou du sulforodhamine, ou toute autre substance fluorescente.

Selon un mode de réalisation, le dispositif forme une boîte de lecture de faible encombrement et la matrice de plots est supportée par une carte de type « carte à puce ».

L'invention concerne aussi le procédé de mise en oeuvre du dispositif précédent qui se caractérise par le fait qu'il consiste en :
- une étape d'étalonnage du dispositif avec positionnement et blocage de la matrice sous l'axe optique de l'objectif du microscope, mise au point des moyens de prise d'image et recherche automatique d'un plot de référence par rapport au centre optique du dispositif ;
- une étape d'acquisition de l'image d'un plot de la matrice ; et
- une étape de calcul de la fluorescence dudit plot puis de déduction de la concentration de la substance.

Dans le mode de réalisation où l'acquisition des images est effectuée par une caméra CCD refroidie, le procédé de l'invention comporte, entre les étapes d'étalonnage et d'acquisition, une étape de balayage, point par point, du plot étudié.

### Brève description des figures

- La figure 1 représente, schématiquement, le dispositif de l'invention ; et
- les figures 2A, 2B et 2C représentent le diagramme fonctionnel du procédé de mise en oeuvre du dispositif de l'invention.

### Description détaillée de modes de réalisation de l'invention

L'invention concerne un dispositif pour déterminer la concentration d'une substance mélangée à un fluorophore et contenue dans un ou plusieurs plots d'une matrice de plots déposée sur un support peu absorbant et réfléchissant. Le fluorophore est généralement choisi parmi les produits suivants : phycoérythrine, C-Snarf, ou sulforodamine.

Ce dispositif comprend un microscope qui fonctionne, de préférence, en épi-illumination, c'est-à-dire par réflexion de la lumière, et qui est associé à un objectif de grossissement qui peut être un grossissement par cinq, par dix ou par vingt, etc., ainsi qu'à des moyens de prise d'image, destinés à réaliser une image à travers le microscope de la fluorescence d'un des plots de la matrice ou d'une partie d'un plot.

Le dispositif comporte également des moyens d'éclairage, qui, de préférence, consistent en une source d'éclairage annulaire qui émet un premier faisceau lumineux et en une source laser qui émet un second faisceau lumineux. Le premier faisceau permet d'effectuer une prise d'image en lumière blanche du plot à étudier et le second faisceau est destiné à exciter le fluorophore contenu dans le mélange des substances.

Le dispositif de l'invention comprend aussi des moyens de déflexion destinés à défléchir le second faisceau et à assurer un balayage point par point, du plot ou de la partie du plot à étudier.

Il comporte, en outre, des moyens d'enregistrement de l'image du plot, ainsi que des moyens de traitement pour analyser cette image, afin de quantifier la fluorescence du plot et, ainsi, déterminer la concentration de la substance mélangée au fluorophore.

Comme on le verra plus en détail par la suite, les moyens de prise d'image peuvent consister en une caméra CCD refroidie, devant laquelle est placé un filtre coloré. Cette caméra est associée à une carte électronique qui assure le pilotage de la caméra, ainsi que des moyens d'éclairage.

Selon une autre variante, les moyens de prise d'image peuvent consister en un photomultiplicateur associé à une carte d'acquisition, et devant lequel est placé un filtre coloré ; une carte électronique, associée à ce photomultiplicateur assurent le pilotage de ce dernier ainsi que le pilotage des moyens d'éclairage.

Le dispositif de l'invention, décrit précédemment d'une façon générale, peut s'appliquer, en particulier, à la détermination de la concentration d'une substance mélangée à un fluorophore et appliquée sur les plots d'une matrice adressable électriquement telle qu'une puce à ADN. Dans ce cas, la substance à analyser est généralement une substance composée de brins d'ADN hybridés à des sondes faites à partir d'ADN de synthèse. Les sondes à ADN peuvent alors être fortement fixées aux plots par l'intermédiaire de polypyrrole.

Le dispositif s'applique, en particulier, à la puce MICAM®.

C'est ce mode de réalisation, relatif à la puce MICAM®, qui va être décrit en détail dans la suite de la description.

La puce MICAM® est de taille restreinte (environ 2 x 2 mm²) et comporte environ 100 à 1 000 plots mesurant environ 50 µm chacun et bien espacés les uns des autres, c'est-à-dire espacés d'environ 100 µm. La numérotation des plots suit exactement celle employée pour le greffage des sondes, à savoir une numérotation de type BOUSTROPHEDON.

Cette structure permet à chaque plot de la puce de porter une séquence bien définie, qui illustre ce que recherche l'opérateur, c'est-à-dire une information biologique. Cette puce MICAM® présente, ainsi, l'avantage de permettre une parfaite localisation de chaque sonde implantée dans les plots de la puce. Par exemple, en cas de recherche de mutation de certains codons dans un gêne particulier, c'est-à-dire ce que le biologiste appelle « reséquençage », la sonde qui va répondre à cette recherche, c'est-à-dire la sonde sur laquelle une ou plusieurs séquences d'ADN vont s'accrocher, est parfaitement localisée. Le biologiste a donc en mains, une carte très précise, sur laquelle il cherche des points qui l'intéressent particulièrement et qu'il lui faudra quantifier.

En outre, le dispositif de l'invention a l'avantage de fournir au biologiste une image globalge de la puce à travers le microscope. Cette association « carte à plots très précise » et « image sous-microscope » offre la possibilité, au biologiste, de venir extraire l'information qui l'intéresse là où elle se situe, très exactement, au moyen d'un balayage à accès aléatoire d'un faisceau laser.

On appelle « balayage aléatoire », la possibilité de faire une image en lumière blanche et d'adresser instantanément au moyen d'un déflecteur, un faisceau laser à quelque endroit du champ. Ce balayage dit « aléatoire » offre la possibilité de travailler en épi-illumination, ou sous une incidence d'environ 45° (et de façon plus générale, entre 30 et 60°). Ceci permet un gain de temps important, ainsi qu'un gain de mémoire, puisque seuls les plots qui intéressent le biologiste sont adressés. Cependant, on notera qu'un tel balayage aléatoire, s'il peut être utilisé avec une puce MICAM® dont les plots sont disjoints, ne peut pas être utilisé avec la plupart des puces et, en particulier, les puces appelées « GENECHIP® », car les séquences sont fragmentées en éléments côte à côte et le balayage est obligatoirement séquentiel.

Or, en expérimentation, on peut n'avoir que quelques plots intéressants à examiner ; aussi, un balayage à accès aléatoire présente de grands avantages, ne serait-ce que par sa rapidité et l'élimination des zones inutiles, à savoir le plots considérés comme inintéressants par le biologiste.

Pour effectuer un balayage à accès aléatoire, on utilise un microscope à balayage, car, comme expliqué dans l'étude de T. WILSON, intitulée « Theory and practice of scanning optical microscopy », 1984, le microscope à balayage permet de concentrer l'énergie sur un plot à analyser et de balayer la surface de ce plot point par point ; on diminue ainsi considérablement la lumière parasite, dans la mesure où seul le point éclairé est fluorescent. Ce microscope à balayage offre donc à la fois une réponse impulsionnelle correcte et de bonnes performances.

Selon le mode de réalisation préféré de l'invention, ce microscope à balayage est obtenu à partir d'un microscope conventionnel associé à des moyens de déflexion, tels que par exemple un déflecteur acousto-optique, effectuant un balayage laser par pas de 10 µm sur un champ de 2,5 mm, à travers l'objectif du microscope, et selon deux directions orthogonales X et Y. Avec un tel système, on obtient un balayage à accès aléatoire dont le temps d'accès est de l'ordre de quelques µs.

En effet, compte tenu des petites dimensions de la puce MICAM®, un balayage de type acousto-optique est avantageux ; toutefois, d'autres types de balayage, par exemple, un balayage par miroirs galvanométriques, ou un balayage par tables de déplacements, peuvent également être utilisés.

Par ailleurs, les petites dimensions et la structure particulière de la puce MICAM® font qu'il n'est pas nécessaire de travailler en confocal. On rappelle, à toutes fins utiles, que le terme « confocal » signifie que, par des techniques de filtrages spatiaux, on isole un petit volume de lecture dont la taille dépend essentiellement de l'ouverture numérique de l'objectif. Par exemple, dans le cas d'une puce MICAM®, on peut utiliser un objectif de grossissement x10, c'est-à-dire à ouverture numérique ON = 0,25, ce qui donne un volume confocal de diamètre 1 µm pour une hauteur de 8 µm. Or, la taille des plots d'une puce MICAM® est d'environ 50 µm, que l'on veut observer avec une défocalisation inférieure à 10 µm. Il n'est donc pas nécessaire d'être en mode confocal.

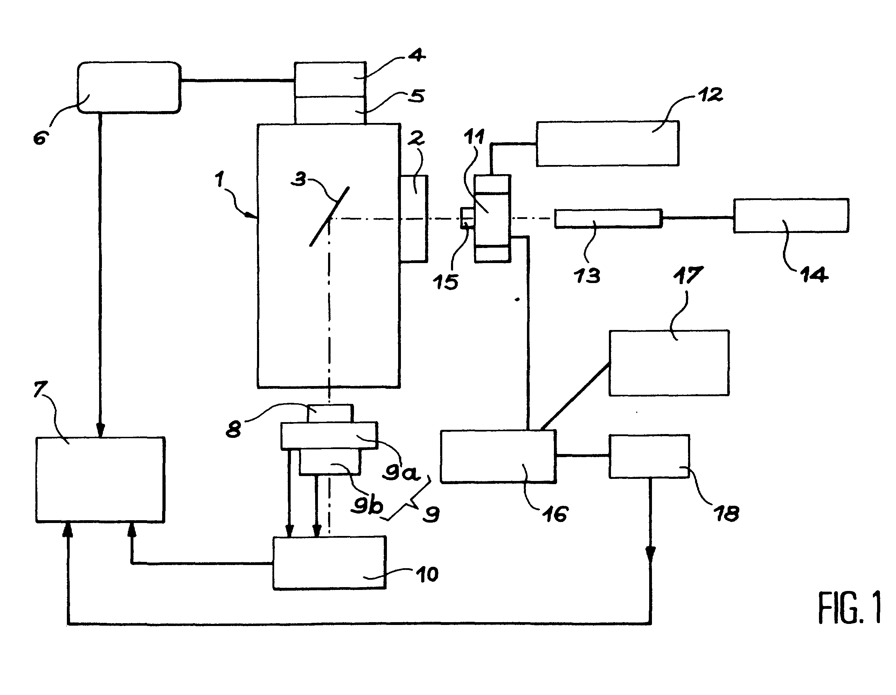

Sur la figure 1, on a représenté, schématiquement, le dispositif de l'invention adapté à la lecture des puces MICAM®.

Ce dispositif comporte un microscope classique, référencé 1, et destiné à fonctionner en épi-illumination, c'est-à-dire par réflexion. Un objectif 2 est fixé sur le microscope 1 ; cet objectif peut avoir un grossissement x5, ou bien x10, ou encore x20. Les objectifs les plus classiques sont :
- objectif x5 :: 0N = 0,10 ;
corrigés à l'infini ; f = environ 35 mm ;
- objectif x10, plan achromatique :: ON = 0,30 ;
corrigé à l'infini ;
f = environ 16 mm ;
cet objectif permet une distance de travail de 10 mm avec une résolution de 1,12 µm,
- objectif x20, plan achromatique :: ON = 0,46 ;
corrigé à l'infini ;
f = environ 8 mm ;
la distance de travail est de 3 mm et la résolution de 0,73 µm.

Il est également possible d'utiliser un objectif de grossissement x50, mais sa distance de travail est courte, c'est-à-dire 1 mm ; il ne peut donc pas être utilisé sur une puce fonctionnelle recouverte d'une lame de verre.

Selon le mode de réalisation représenté sur la figure 1, le microscope 1 est muni d'un filtre dichroïque 3, qui peut être différent en fonction du type de laser utilisé.

De plus, le microscope 1 est associé à des moyens de prise d'image, qui, dans ce mode de réalisation consistent en une caméra, référencée 4.

De préférence, cette caméra est une caméra CCD refroidie entre 0 et -20°C. Cette caméra 4 est associée à une carte électronique qui assure le pilotage, d'une part, de la caméra et, d'autre part, des moyens d'éclairage, qui seront décrits plus en détail ultérieurement. Cette carte électronique, référencée 6 assure le transfert des informations issues de l'ensemble du dispositif vers des moyens informatiques, référencés 7 sur la figure 1. Ces moyens informatiques peuvent être, tout simplement, un PC.

De plus, les moyens de prise d'image comportent un filtre 5, placé devant le détecteur. Ce filtre 5 est un filtre de couleur, de préférence, orange, dont le rôle est d'éviter la rétrodiffusion de type Rayleigh, c'est-à-dire la rétrodiffusion de la lumière d'excitation du fluorophore. Avantageusement, ce filtre 5 est un filtre passe-haut dont la fréquence de coupure est d'environ 550 nm.

Comme on le voit sur cette figure, le microscope est placé au-dessus de la puce MICAM®, référencée 8, elle-même placée sur une table de déplacement 9. Cette table de déplacement peut être un ensemble de deux tables de déplacement, l'une se déplaçant horizontalement selon l'axe des X et l'autre perpendiculairement selon l'axe des Y. Ces tables X et Y peuvent être manuelles. Selon le mode de réalisation représenté sur la figure 1, ces deux tables, référencées respectivement 9a et 9b, sont motorisées et reliées au PC 7 par un contrôleur 10. Outre ses déplacements selon les axes X et Y, cette table 9 peut également être orientée en rotation selon un angle θ, au moyen d'une platine micrométrique, à commande manuelle ou automatique selon le mode de réalisation choisi.

Le dispositif de l'invention comporte, de plus, des moyens d'éclairage destinés, d'une part, à la prise d'image et, d'autre part, à l'excitation du fluorophore. Ces moyens de prise d'image comportent un éclairage annulaire 11, réalisé au moyen de plusieurs diodes électroluminescentes blanches, réparties sur un support en forme de couronne et pilotées par une source d'alimentation de faible tension, soit 10 à 20 V, référencée 12. Cet éclairage annulaire 11 a pour but de permettre la réalisation d'une image en lumière blanche de la puce, ou d'une partie de la puce.

Cet éclairage annulaire 11 est piloté par un driver (ou dispositif de commande) 16, lui-même alimenté par une source d'alimentation 17 dont la tension de polarisation est, par exemple, de 24 V et la tension de modulation de 5 V. Le driver 16 est également connecté à une source d'alimentation programmable qui fournit une tension de déflexion variant entre 0 et 10 V, elle-même pilotée par le PC 7.

Les moyens d'éclairage comprennent, en outre, une source laser 13, alimentée par une source d'alimentation 14 et émettant un faisceau laser destiné à exciter le fluorophore contenu dans le mélange. Le faisceau laser émis par la source laser 13 est défléchi dans deux directions orthogonales X et Y par un déflecteur acousto-optique, référencé 15.

Ce laser peut être un laser HeNe vert polarisé ou encore un laser argon. Ce laser 13 peut également, selon le mode de réalisation choisi, être un microlaser continu ou pulsé.

Ainsi, avec le dispositif représenté sur la figure 1, l'image de la puce est formée à travers l'objectif x5 ou x10. L'objectif x5 couvre environ 2,3 x 1,5 mm², c'est-à-dire toute la surface d'une puce MICAM® ; l'objectif x10 couvre environ 0,7 x 0,5mm², soit environ le quart du champ, puisque la partie active de la puce MICAM® est de 1,6 x 0,8 mm².

Avec un objectif x10, le fonctionnement du dispositif est le suivant : le laser, qui est, de préférence, un laser HeNe vert, émet un faisceau qui est agrandi quatre fois pour pénétrer dans le déflecteur acousto-optique 15 avec un diamètre de 3,52 mm et une divergence de 0,2 mrad. Avec cet objectif x10, on obtient un balayage dans le plan-objet d'environ 16 mm x 41 mrad, c'est-à-dire environ 700 µm, ce qui correspond au champ vu par la caméra CCD. On peut alors soit balayer point par point le plot à analyser, soit balayer l'ensemble du plot et laisser la caméra intégrer les différentes images pendant un certain intervalle de temps, par exemple, de 1 s.

Dans le cas particulier où le plot à balayer est de 50 x 50 µm, c'est-à-dire 3,12 mrad dans chaque axe, on obtient un pas de tension de 0,75 V. On réalise alors une rampe de tension, sur chacun des axes X et Y, d'un angle θ₀ jusqu'à θ₀ + 3,1 mrad. Avec une fréquence de récurrence de 1 kHz, l'aller-retour du faisceau laser est effectué en 8 µs, avec un taux de, 1/3, soit un pas de 2 µs dans l'autre axe. Il faut alors 25 allers-retours, c'est-à-dire 25 µs pour balayer tout le plot. Pour un temps d'intégration d'1 s, qui est le temps d'intégration moyen d'une caméra CCD, on peut alors effectuer 40 balayages.

Avec un objectif x5, on obtient un faisceau ayant une divergence de 0,8 mrad, ce qui donne, avec une focale de 40 mm, un balayage dans le plan-objet d'environ 32 µm. L'intégration des images du plots se fait alors entre 0,5 s et 1 s. Le pas de déplacement du déflecteur acousto-optique est de 100 µm et le champ balayé est d'environ 1,64 mm. Le pas angulaire du balayage est de 2,5 mrad, ce qui correspond à une variation de tension ΔV de 0,61 V.

Comme on la vu précédemment, le dispositif de l'invention comporte, de préférence, un microscope fonctionnant en épi-illumination, c'est-à-dire dans lequel le balayage est réalisé, par réflexion, à travers l'objectif du microscope.

Cependant, il est également possible d'exciter le fluorophore au moyen d'un laser HeNe et d'une optique dont l'axe optique serait entre 30 et 60° d'incidence par rapport à la verticale. Ce mode de réalisation est moins facile à mettre en oeuvre que le mode de réalisation en épi-illumination, mais il présente l'avantage d'éliminer toutes les réflexions parasites, c'est-à-dire la lumière incidente réfléchie hors de l'objectif (environ 30 % de la lumière incidente).

Le dispositif de l'invention qui vient d'être décrit est mis en oeuvre par un procédé qui consiste en :
- une étape d'étalonnage du dispositif avec positionnement et blocage de la matrice sous l'axe optique du microscope, avec mise au point des moyens de prise d'image et recherche automatique d'un plot de référence par rapport au centre optique du dispositif ;
- une étape d'acquisition de l'image d'un plot de la matrice ; et
- une étape de calcul de la fluorescence dudit plot, puis de déduction de la concentration de la substance.

Dans le cas où l'acquisition d'image est effectuée par une caméra CCD refroidie, le procédé comporte, entre l'étape d'étalonnage et l'étape d'acquisition d'image, une étape de balayage point par point du plot dont on cherche à déterminer la concentration de la substance appliquée dessus.

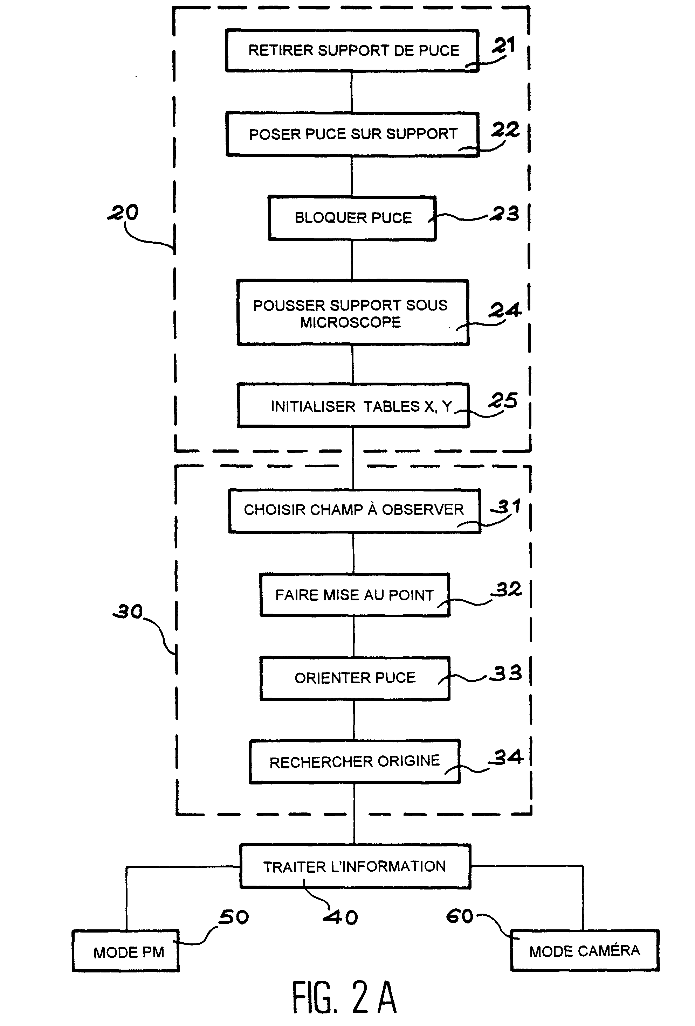

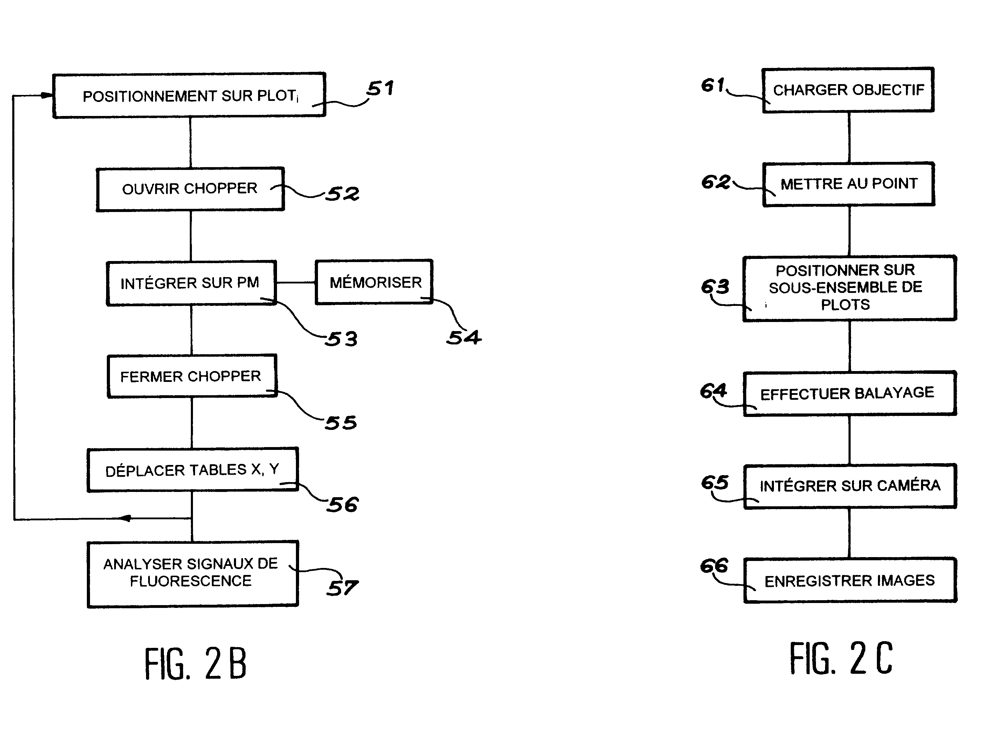

Sur les figures 2A, 2B et 2C, on a représenté, schématiquement, le diagramme fonctionnel du procédé de l'invention avec deux modes de traitement de l'information, à savoir le mode utilisé lorsque les moyens d'acquisition consistent en un photomultiplicateur associé à une carte d'acquisition et dans lequel les moyens d'acquisition d'image consistent en une caméra CCD refroidie.

La figure 2A représente les étapes du procédé de mise en oeuvre du lecteur de l'invention, qui sont communes aux deux modes de réalisation, c'est-à-dire le mode où l'image est réalisée au moyen d'un mode photomultiplicateur associé à une carte d'acquisition, appelé « mode PM » et le mode utilisant une caméra CCD, appelé « mode CAMERA ».

Ce procédé comporte, en effet, trois parties principales, à savoir la partie 20 qui est le positionnement de la puce sous le microscope, la partie 30 qui consiste en des réglages du dispositif et une partie 40 de traitement de l'information. C'est cette partie de traitement de l'information 40, qui se décompose en deux sous-parties distinctes selon le mode de réalisation choisi, c'est-à-dire le mode PM ou le mode CAMERA.

La partie de positionnement de la puce 20 comporte, tout d'abord, une étape 21 qui consiste à dégager la puce de son support ; en effet, il n'est pas possible matériellement d'insérer, sous l'objectif du microscope, la totalité de la puce, c'est-à-dire les circuits micro-électroniques ainsi que le support, qui est souvent une carte du type carte à puce. La puce est donc retirée de son support classique pour être positionnée sur un support plus adapté, à savoir un support de type époxy. Ce positionnement est effectué manuellement avec une certaine tolérance (de l'ordre de 1/10 mm, par exemple) due, en particulier, à l'irrégularité entre les supports époxy sur lesquels sont fixées les puces.

La puce est ensuite bloquée sur son support époxy par dépression, à l'étape 23. Après le blocage de la puce sur ce support époxy, une étape 24 consiste à repositionner l'ensemble support/puce sous l'axe optique de l'objectif du microscope, avec un désalignement de l'ordre du dizième de millimètre. Une étape 25 consiste, ensuite, à initialiser les tables de déplacement en X et en Y ; autrement dit, cela consiste à effectuer le zéro mécanique des tables de déplacement.

La partie 30 de réglages du dispositif commence par une étape 31 qui consiste à choisir le champ à observer, puis, dans une étape 32, à effectuer une mise au point manuelle, soit à l'oculaire, soit sur l'image caméra, de ce champ à observer (l'image caméra étant une image en lumière blanche réalisée à partir de l'éclairage annulaire).

Le procédé se poursuit par une étape 33 qui consiste à orienter la puce sous le microscope. Pour des questions de simplicité, la puce est orientée en rotation manuellement, au moyen d'un plateau de contrôle, de sorte que ses axes soient parallèles au référentiel absolu (c'est-à-dire à l'axe optique reliant l'objectif et la caméra ou le photomultiplicateur). En cas de nécessité, cette étape peut être automatisée à l'aide d'un logiciel d'analyse d'image calculant l'orientation de la puce. Cette orientation peut se faire soit en superposant à l'image une croix synthétisée sur l'ordinateur PC, soit par une méthode optique de diffraction de lumière par les plots.

La partie de réglage se termine ensuite, par une étape 34 de recherche de l'origine, qui se fait de façon automatique. Cette étape 34 consiste à rechercher automatiquement, au moyen d'un logiciel d'analyse d'image, le premier plot, c'est-à-dire le plot numéroté « 0 ». Ce plot « 0 » varie suivant le système de numérotation choisi ; il s'agit souvent du plot placé en haut à gauche sur la matrice de plots ou bien du plot central. Cette origine est repérée par rapport au centre optique (c'est-à-dire l'intersection de l'axe optique avec le plan-objet), ce qui permet de commander le déplacement des tables X et Y pour amener le premier plot, ou plot 0, au centre du champ.

Le procédé de mise en oeuvre du lecteur de l'invention se poursuit par une étape 40 de traitement de l'information, c'est-à-dire d'analyse du signal de fluorescence. Cette phase d'analyse peut être réalisée selon deux modes différents, à savoir le mode PM et le mode CAMERA.

On a représenté, sur la figure 2B, le schéma fonctionnel du mode PM. On rappelle que le mode PM est le mode qui est mis en oeuvre lorsque les moyens d'acquisition d'image consistent en un photomultiplicateur associé à une carte d'acquisition.

Ce mode de réalisation est essentiellement utilisé en analyse de routine.

Dans ce cas, l'image n'est pas nécessaire, c'est pourquoi la caméra peut être remplacée par un photomultiplicateur ou par une photodiode à avalanche refroidie, dont le coût est nettement inférieur.

Par ailleurs, dans ce mode de réalisation, la lecture des plots est automatique et séquentielle ; le système de déflexion n'est donc pas nécessairement de type acousto-optique.

Le procédé de l'invention, dans ce mode PM consiste, d'abord, en une étape 51 de positionnement du plot choisi, c'est-à-dire le plot i, sous l'axe optique, ce qui peut revenir à effectuer le déplacement du faisceau laser sur le plot i.

Ensuite, une étape 52 consiste à ouvrir l'obturateur, puis une étape 53 consiste en l'intégration sur le photomultiplicateur, du signal reçu du plot i, puis en la mémorisation, à l'étape 54, du signal obtenu.

Une étape 55 consiste ensuite à refermer l'obturateur. Celui-ci trouve un réel intérêt dans le cas où le déplacement est lent ; il permet, en effet, d'éviter d'illuminer tout ou partie du plot avant que le mouvement de la puce ne soit stabilisé. Dans ce cas, il faut synchroniser l'acquisition du signal avec les déplacements, c'est-à-dire l'ouverture et la fermeture de l'obturateur. D'une façon générale, le photomultiplicateur étant un détecteur extrêmement sensible à toute lumière, l'utilisation de l'obturateur constitue un mode de réalisation très avantageux.

Une étape 56 consiste ensuite à déplacer les tables X et Y afin de placer le plot suivant sous l'objectif et à recommencer le procédé.

Lorsque tous les plots de la matrice ont été visualisés, on effectue, dans une étape 57, une analyse du signal de fluorescence ; autrement dit, on détermine, à partir du signal de fluorescence, la concentration de la substance recherchée, mélangée au fluorophore. Cette analyse étant classique pour l'homme de l'art, elle n'est pas décrite dans cette demande.

Sur la figure 2C, on a représenté, schématiquement, le diagramme fonctionnel du procédé de l'invention dans son mode CAMERA.

Pour une analyse plus « fine » de la fluorescence, c'est-à-dire une analyse tenant compte de l'homogénéité du plot, on effectue, de préférence, une analyse d'image à fort grossissement, c'est-à-dire avec un objectif x10 ou x20. Or, ces objectifs ne permettent d'obtenir qu'un champ partiel (par exemple, un objectif x10 fournit un quart du champ).

Ce procédé commence par une étape 61 qui consiste à charger sur le microscope l'objectif choisi, c'est-à-dire un objectif x5, x10, ou encore x20. Le procédé se poursuit par une étape 62 qui consiste en une mise au point manuelle sur l'image de la caméra.

Une étape 63 consiste ensuite en un positionnement automatique du sous-champ sur un sous-ensemble de plots. Ce sous-ensemble de plots est numéroté selon le même principe que celui utilisé pour la numérotation des plots de la matrice. Le positionnement automatique sur un sous-ensemble de plots se fait au moyen des tables de déplacement X et Y.

Une étape 64 consiste ensuite en un balayage de chaque sous-ensemble de plots. Ce balayage est réalisé au moyen du déflecteur acousto-optique, dans un mode sur-échantillonné.

Une étape 65 consiste ensuite en l'intégration simultanée des signaux sur la caméra. On peut préciser, à titre d'exemple, que le faisceau est positionné au bord du plot à balayer et qu'il balaye ce plot à une fréquence de 1 kHz environ, pendant que la caméra intègre sur une période de 100 µs à 10 s.

Enfin, une étape 66 consiste à enregistrer les images effectuées précédemment et à archiver ces images.

Par ailleurs, il est connu de l'homme de l'art que la spécificité de l'hybridation est accrue lorsque l'on chauffe, de façon contrôlée, la puce. Cela est décrit notamment dans la demande de brevet déposée en France sous le numéro 97 08864.

Dans le dispositif de l'invention, ce chauffage peut se faire :
- soit par un chauffage global de la puce ;
- soit par un chauffage localisé par plots :
ce dernier peut être obtenu par une résistance électrique entourant chaque plot ; avantageusement, il peut être obtenu à partir du faisceau laser (de préférence, un laser pulsé visible), qui est focalisé sur le plot et qu'il peut ainsi chauffer sans nécessiter aucun moyen supplémentaire.

## Revendications

1. Dispositif de détermination de la concentration d'une substance mélangée à un fluorophore et contenue dans un ou plusieurs plots d'une matrice de plots déposés sur un support peu absorbant et réfléchissant, caractérisé en ce qu'il comprend :
- un microscope (1), associé à un objectif de grossissement (2) ainsi qu'à des moyens de prise d'image (4, 5) pour réaliser une image sous microscope de la fluorescence d'un des plots de la matrice ou d'une partie de ce plot ;
- des moyens d'éclairage (11, 13) émettant un premier faisceau pour permettre la prise d'image en lumière blanche dudit plot et un second faisceau pour exciter le fluorophore contenu dans ledit plot ;
- des moyens de déflexion (15) du second faisceau pour assurer un balayage, point par point, du plot de la matrice ;
- des moyens d'enregistrement (6, 7) de l'image du plot ; et
- des moyens de traitement (6, 7) de cette image pour quantifier la fluorescence du plot et déterminer la concentration de la substance mélangée au fluorophore, à partir de l'intensité de la fluorescence, de l'intensité de l'éclairage et du temps d'intégration sur les moyens de prise d'images.

2. Dispositif selon la revendication 1, caractérisé en ce que les moyens d'éclairage comportent une source d'éclairage annulaire (11) qui émet le premier faisceau et une source laser (13) qui émet le second faisceau.

3. Dispositif selon l'une quelconque des revendications 1 et 2, caractérisé en ce que les moyens de prise d'image comprennent une caméra CCD refroidie, un filtre coloré placé devant ladite caméra et une carte électronique assurant le pilotage de la caméra et des moyens d'éclairage.

4. Dispositif selon l'une quelconque des revendications 1 et 2, caractérisé en ce que les moyens de prise d'image comprennent un photomultiplicateur associé à une carte d'acquisition, un filtre coloré placé devant ledit photomultiplicateur et une carte électronique assurant le pilotage de la caméra et des moyens d'éclairage.

5. Dispositif selon l'une quelconque des revendications 1 à 4, caractérisé en ce que le microscope est muni d'un filtre dichroïque (3).

6. Dispositif selon l'une quelconque des revendications 1 à 5, caractérisé en ce que le microscope fonctionne en épi-illumination.

7. Dispositif selon l'une quelconque des revendications 1 à 6, caractérisé en ce que les moyens de déflexion consistent en un déflecteur acousto-optique défléchissant le second faisceau dans deux directions orthogonales X et Y.

8. Dispositif selon l'une quelconque des revendications 2 à 7, caractérisé en ce que le laser est un microlaser.

9. Dispositif selon la revendication 8, caractérisé en ce que le microlaser est un microlaser pulsé.

10. Dispositif selon l'une quelconque des revendications 3 à 9, caractérisé en ce que le filtre coloré est un filtre passe-haut.

11. Dispositif selon l'une quelconque des revendications précédentes, caractérisé en ce que la matrice est une matrice adressable électriquement.

12. Dispositif selon l'une quelconque des revendications précédentes, caractérisé en ce que la substance est composée de brins d'ADN hybridés à des sondes faites à partir de synthèse d'ADN.

13. Dispositif selon la revendication 12, caractérisé en ce que les sondes à ADN sont fortement fixées aux plots par l'intermédiaire de polypyrrole.

14. Dispositif selon l'une quelconque des revendications précédentes, caractérisé en ce que le fluorophore est pris parmi les produits suivants : phycoerithrine, C-Snarf ou sulforodhamine.

15. Dispositif selon l'une quelconque des revendications précédentes, qui forme une boîte de lecture de faible encombrement, caractérisé en ce que la matrice de plots est supportée par une carte de type « carte à puce ».

16. Procédé de mise en oeuvre du dispositif selon l'une quelconque des revendications précédentes, caractérisé en ce qu'il consiste en :
- une étape d'étalonnage (20) du dispositif avec positionnement et blocage de la matrice sous l'axe optique de l'objectif du microscope, mise au point des moyens de prise d'image et recherche automatique d'un plot de référence par rapport au centre optique du dispositif ;
- une étape d'acquisition (30) de l'image d'un plot de la matrice ; et
- une étape de calcul (40) de la fluorescence dudit plot puis de déduction de la concentration de la substance.

17. Procédé selon la revendication 16 dans lequel l'acquisition des images est effectuée par une caméra CCD refroidie, caractérisé en ce qu'il comporte, entre les étapes d'étalonnage et d'acquisition, une étape de balayage, point par point, du plot concerné.
